# EUROPÄISCHE PATENTANMELDUNG

(11) **EP 1 024 423 A1**
(43) Veröffentlichungstag der Anmeldung: **02.08.2000**
(21) Anmeldenummer: 99101815.1
(22) Anmeldetag: 28.01.1999
(51) Int. Cl.: G06F 1/16

(54) **Aufnahmevorrichtung für ein tragbares Dateneingabegerät**

(71) Anmelder: Hödl, Fritz, 1060 Wien (AT)
(72) Erfinder: Hödl, Fritz, 1060 Wien (AT)
(74) Vertreter: Hilleringmann, Jochen, Dipl.-Ing.

(57) **Zusammenfassung**

Die Aufnahmevorrichtung für ein tragbares Dateneingabegerät, insbesondere für einen tragbaren PC, wie ein Notebook, einen Laptop oder einen Palmtop, ist mit einem Tragelement (28) für das Dateneingabegerät (14), und einem Lagerungs- und Halteelement (30) versehen, an dem das Tragelement (28) zwischen mindestens zwei Schwenkpositionen schwenkbar gelagert ist und in jeder der Schwenkpositionen gegen unbeabsichtigte Schwenkbewegungen gesichert gehalten ist.

## Beschreibung

Die Erfindung betrifft eine Aufnahmevorrichtung für ein tragbares Dateneingabegerät, insbesondere für ein Notebook, für ein Laptop oder einen Palmtop.

Für den Transport von tragbaren Computern, wie Notebooks, Laptops oder Palmtops werden Taschen und Koffer angeboten. Koffer haben in der Ausführungsform als Hartschalenkoffer den Vorteil, daß PC- und Peripheriegeräte wie Drucker, Stromversorgung, Modem etc. geordnet und einsatzbereit in einer der Schalenhälften des Koffers untergebracht werden können. Derartige mobile Bildschirm-Arbeitsplätze sind in einer Vielzahl von Ausgestaltungen bekannt. Als Beispiel seien hier DE-U-297 11 974 und DE-U-91 12 399 genannt.

Bei dem bekannten Hartschalenkoffern ist der tragbare PC in einem als Tiefziehfolie ausgebildeten Tragelement gelagert, das als Einsatzteil in die Bodenschalenhälfte des Hartschalenkoffers eingepaßt ist. Das Gehäuse des tragbaren PC ruht in einer Aufnahmevertiefung des Tragelements. Für den Transport ist die Unterbringung des tragbaren PC in diesem Tragelement durchaus von Vorteil. Ein gewisser Nachteil besteht darin, daß je nach den Gegebenheiten das Arbeiten mit dem in der Bodenschalenhälfte untergebrachten tragbaren PC aus ergonomischen Gründen nicht optimal ist.

Der Erfindung liegt die daher Aufgabe zugrunde, eine Aufnahmevorrichtung zur Unterbringung eines tragbaren Dateneingabegerätes, insbesondere in einem Hartschalenkoffer zu schaffen, wobei der tragbare PC unabhängig von der Beschaffenheit der Auflage, auf der die Aufnahmevorrichtung ruht, eine ergonomisch vorteilhafte Ausrichtung aufweist.

Zur Lösung dieser Aufgabe wird mit der Erfindung eine Aufnahmevorrichtung für ein tragbares Dateneingabegerät, wie insbesondere einen tragbaren PC, vorzugsweise in Form eines Notebooks, eines Laptops oder eines Palmtops vorgeschlagen, wobei die Aufnahmevorrichtung versehen ist mit einem Tragelement für das Dateneingabegerät, und einem Lagerungs- und Halteelement, an dem das Tragelement zwischen mindestens zwei Schwenkpositionen schwenkbar gelagert und in jeder der Schwenkpositionen gegen unbeabsichtigte Schwenkbewegungen gesichert gehalten ist.

Die Aufnahmevorrichtung gemäß der Erfindung weist ein Tragelement auf, auf dem das Dateneingabegerät ruht und insbesondere gegen ungewollte Verschiebungsbewegungen gesichert ist. Dieses Tragelement ist insbesondere in Form einer Platte ausgebildet. Das Tragelement der erfindungsgemäßen Aufnahmevorrichtung ist schwenkbar an einem Lagerungs- und Halteelement gelagert. Im Falle des Einsatzes der erfindungsgemäßen Aufnahmevorrichtung in einem Hartschalenkoffer handelt es sich bei diesem Lagerungs- und Halteelement um ein Einsatzteil, das in eine der beiden Schalenhälften des Koffers eingepaßt ist. Das Tragelement der erfindungsgemäßen Aufnahmevorrichtung ist zwischen mindestens zwei Schwenkpositionen schwenkbar an dem Lagerungs- und Halteelement gelagert, wobei es zusätzlich in jeder der Schwenkpositionen gegen unbeabsichtigte Schwenkbewegungen gesichert gehalten ist.

Mit Hilfe des schwenkbar gelagerten Tragelements ist es möglich, dem tragbaren PC- bzw. dem Dateneingabegerät unterschiedliche Ausrichtungen zu verleihen, wobei die jeweilige Ausrichtposition aufgrund der gegen unbeabsichtigte Schwenkbewegungen gesicherten Lagerung des Tragelements an dem Lagerungs- und Halteelement stabil ist. Insbesondere ist es mit Hilfe der erfindungsgemäßen Aufnahmevorrichtung möglich, das tragbare Dateneingabegerät zwischen einer Transportposition, in der es bei in einer Tasche oder einem Koffer untergebrachter Aufnahmevorrichtung transportiert werden kann, und einer Arbeitsposition zu verschwenken, in der es, weiterhin in der Aufnahmevorrichtung lagernd, schräggestellt ist, um nun die Tasten des Eingabegeräts besser bedienen zu können. Damit trägt die Erfindung ganz wesentlich zur Verbesserung der Arbeitsplatzbedingungen eines mobilen Bildschirm-Arbeitsplatzes bei, da nämlich mit Hilfe der Erfindung der Bediener das von der Aufnahmevorrichtung getragene Dateneingabegerät in eine Position verschwenken kann, in der das Arbeiten mit dem Dateneingabegerät aufgrund der ergonomisch vorteilhaften Ausrichtung des Dateneingabegeräts bequemer und angenehmer ist.

In vorteilhafter Weiterbildung der Erfindung ist vorgesehen, daß an dem Lagerungs- und Halteelement erste und zweite Stützflächen ausgebildet sind, die zur Stabilisierung der Ausrichtung des Tragelements in dessen bei mindestens zwei Schwenkpositionen dienen.

Unter der Voraussetzung, daß die erfindungsgemäße Aufnahmevorrichtung auf einer horizontalen Fläche ruht, läßt sich das Tragelement der erfindungsgemäßen Aufnahmevorrichtun vorzugsweise zwischen einer Horizontalposition und einer dazu schräg verlaufenden Schrägposition hin- und her verschwenken. Die Horizontalposition ist dabei die Transportposition, während die Schrägposition der Arbeitsposition des Dateneingabegeräts entspricht.

Wie bereits oben erwähnt, kann es sich bei dem Tragelement um ein insbesondere als Tiefziehteil ausgebildetes Einsatzteil handeln, das in eine der beiden Schalenhälften eines Hartschalenkoffers (im allgemeinen in die Bodenschalenhälfte) eingepaßt ist. Die Aufnahmevorrichtung weist in einem solchen Fall vorteilhafterweise eine unterhalb des Tragelements angeordnete Aussparung auf, in der Peripheriegeräte des Dateneingabegeräts unterhalb desselben angeordnet sind. Beim Verschwenken des Tragelements in die Arbeitsposition taucht ein Teil de Tragelements in die Aussparung ein. Zweckmäßigerweise ist die Arbeitsposition derart auf die Abmessungen des Dateneingabegeräts abgestimmt, daß sich die Tastatur des Dateneingabegeräts in der Arbeitsposition des Tragelements in Höhe der Oberkante der betreffenden Schalenhälfte des Hartschalenkoffers befindet. In der Transportposition befindet sich das Tragelement dagegen oberhalb der Aussparung.

Das Tragelement ist vorteilhafterweise an einer Achse des Lagerungs- und Halteelements drehbar gelagert. Bei dieser Achse handelt es sich zweckmäßigerweise um eine durchgehende, die Aussparung überspannende Achse. Alternativ dazu kann die Achse in Form zweier Achsabschnitte ausgebildet sein, die von einander diametral gegenüberliegenden Bereichen des Lagerungs- und Halteelements abstehen und in die Aussparung hineinragen. In beiden Fällen ist es von Vorteil, wenn das Tragelement mittels federelastischen Halteclipsen auf die Achse bzw. die Achsen aufgesteckt ist. Diese Halteclipse umgreifen mit ihren Federschenkeln die Achse bzw. Achsen und erlauben damit die Drehbewegung des Tragelements um die Achse bzw. Achsen. Für diesen Zweck einsatzbare Halteclipse weisen zweckmäßigerweise in Seitenansicht betrachtet eine C-Form bzw. eine Q-Form auf. Derartige Halteclipse sind in Federstahlausführung in verschiedenen Varianten im Markt erhältlich.

Vorzugsweise läßt sich das Tragelement von dem Lagerungs- und Halteelement bei Bedarf abnehmen. Damit ist es möglich, herstellerseitig die Aufnahmevorrichtung mit einem auf den jeweiligen Typ des Dateneingabegeräts abgestimmtes Tragelement auszustatten.

Die Fixierung des Tragelements in den jeweiligen Schwenkpositionen erfolgt vorzugsweise mit Hilfe von Rastvorrichtungen, die miteinander zusammenwirkende Rastvorsprünge und Rastaufnahmen am Tragelement und am Lagerungs- und Haltelement aufweisen. Hier lassen sich beispielsweise Federstahlklemmen mit korrespondierenden Federstahlschnappern einsetzen, wobei die Federstahlschnapper verbreiterte Kopfenden aufweisen, die in die Federstahlklemmen eintauchen und dort einrasten.

Die gesamte Aufnahmevorrichtung besteht zweckmäßigerweise aus Kunststoff, wobei eventuell ein anderes Material lediglich für die Lagerungsteile des Tragelements und die Rast- bzw. Arretierungsvorrichtungen zum Sichern des Tragelements in den mindestens zwei Schwenkpositionen am Lagerungs- und Haltelement Metall in Form von Federstahl eingesetzt werden sollte. Gegebenenfalls kann auch die Achse bzw. die Achsen an der/denen des Tragelement drehbar gelagert ist/sind, aus Metall bestehen.

Nachfolgend wird anhand der Figuren ein Ausführungsbeispiel der Erfindung näher erläutert. Im einzelnen zeigen:
- Fig. 1: eine perspektivische Darstellung eines Hartschalen-Aktenkoffers in aufgeklapptem Zustand mit in der Bodenschalenhälfte angeordnetem Notebook und Drucker und mit der Deckelschalenhälfte befindlicher Kassette für Zubehörmaterial, beispielsweise Papier,
- Fig. 2: eine Darstellung ähnlich der gemäß Fig. 1, in der jedoch das Notebook mit dem dieses tragenden Tragelement in der Bodenschalenhälfte abgehoben dargestellt ist,
- Fig. 3: eine Schnittansicht entlang der Linie III-III der Fig. 2 zur Verdeutlichung des Aufbaus und des Zusammenwirkens von Tragelement und Lagerungs- und Halteelement der in der Bodenschalenhälfte des Hartschalen-Aktenkoffers untergebrachten Aufnahmevorrichtung, und
- Fign. 4 und 5: Schnittdarstellungen entsprechend Fig. 3 in der Transport- und Arbeitsposition des Tragelements des Notebooks.

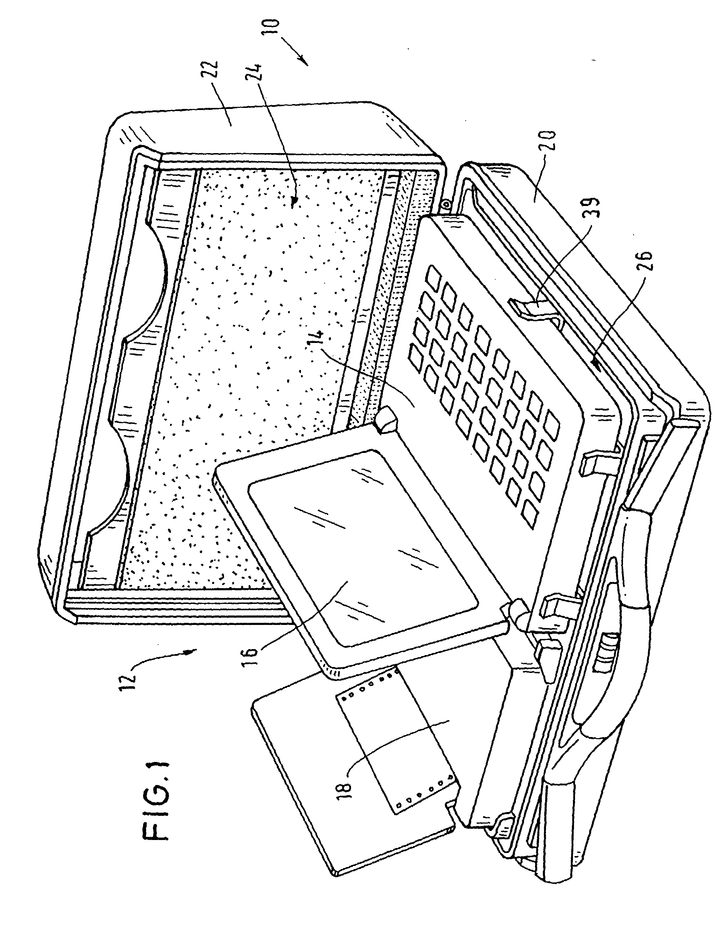

In Fig. 1 ist perpektivisch ein mobiler Bildschirm-Arbeitsplatz 10 dargestellt, bei dem in einem Hartschalenkoffer 12 ein Notebook 14 mit Bildschirm 16 und ein Drucker 18 untergebracht sind. Diese Elemente und weitere Komponenten, wie beispielsweise eine Telekommunikationseinrichtung (Mobiltelephon mit Basisstation und schnurlosem Telefonhörer oder Handy), ein Netzteil, eine Akkuenergieversorgungsstation o.dgl., sind in der Bodenschalenhälfte 20 des Hartschalenkoffers 12 untergebracht, während die Deckelschalenhälfte 22 eine Papierkassette 24 aufweist. Die Geräte und Komponenten 14,16,18 sind in einem Kunststoff-Formkörper 26 untergebracht, der in die Bodenschalenhälfte 20 eingepaßt ist.

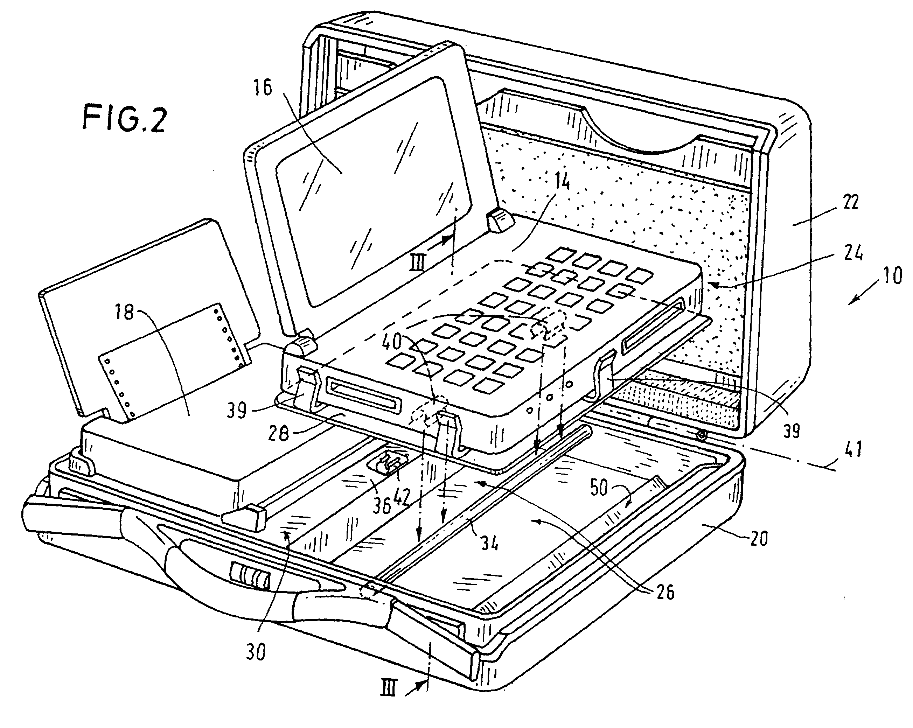

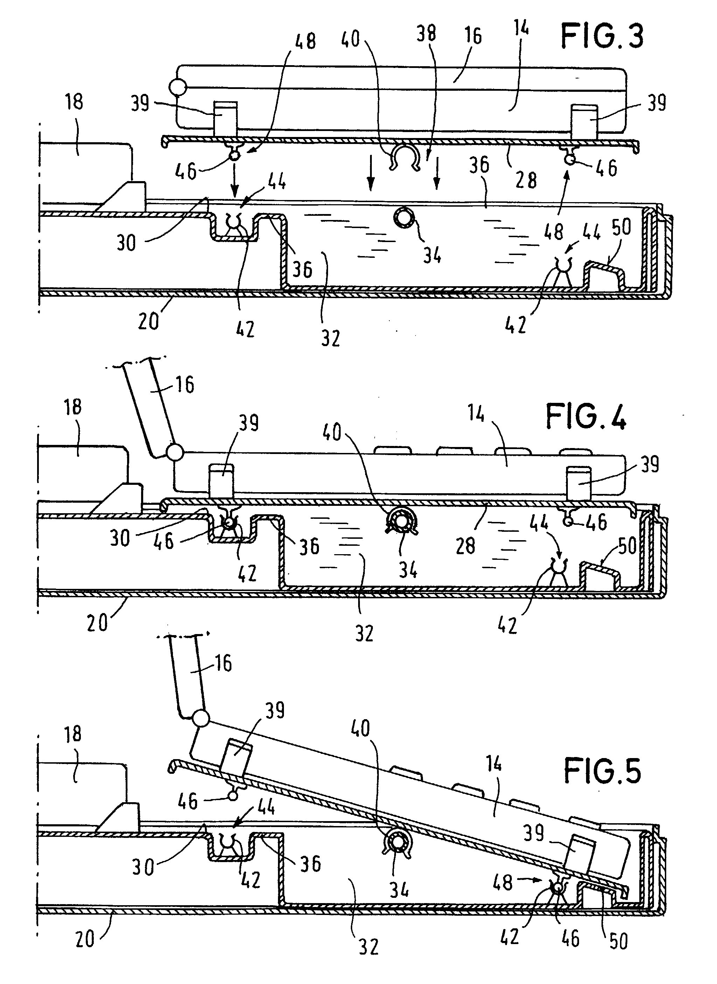

Der Formkörper 26 bildet eine Aufnahmevorrichtung zur Aufnahme und Lagerung des Notebooks 14 und weist ein Tragelement 28 in Form einer insbesondere biegesteif ausgeführten Platte und ein Lagerungs- und Haltelement 30 auf, das in die Bodenschalenhälfte 20 eingesetzt ist und unterhalb des Tragelements 28 eine Aussparung 32 aufweist. Die Aussparung 32 ist von einer Lagerungsachse 34 überspannt, deren Enden in dem die Aussparung 32 begrenzenden Rand 36 des Lagerungs- und Halteelements 30 gehalten sind (siehe auch Fign. 2 und 3). Das plattenartige Tragelement 28 weist entlang des Randes an der Oberseite mehrere den Notebook 14 seitlich umgreifende Haltebügelelemente 37 auf und ist an seiner Unterseite mit zwei Lagerteilen 38 in Form von Ω- bzw. C-förmigen Federstahlklemmen 40 versehen, die von oben auf die Achse 34 aufgesteckt sind. Damit ist das Tragelement 28 um die Achse 34 schwenkbar am Lagerungs- und Halteelement 30 gelagert. Diese Achse 34 läuft im übrigen quer zur Scharnierachse 41 der beiden Schalenhälften 20,22 des Koffers 12.

Die beiden Schwenkpositionen, die das Tragelement 28 stabil einnehmen kann, sind in den Fign. 4 und 5 gezeigt. In der ersten Schwenkposition gemäß Fig. 4 befindet sich das Tragelement 28 bei im wesentlichen horizontaler Ausrichtung oberhalb der Aussparung 32 und ruht in Teilbereichen des die Aussparung 32 begrenzenden Randes 36 des Lagerungs- und Halteelements 30. Im Bereich des Randes 36 weist das Lagerungs- und Halteelement 30 ein als Federstahlklemme 42 ausgebildetes Halteteil 44 auf, das mit einem als Federstahlschnapper 46 ausgebildetes Rastteil 48 zusammenwirkt, das an der Unterseite des Platten-Tragelement 28 angeordnet ist. In der Transportposition gemäß Fig. 4 ist dieses Rastteil 48 in der Federstahlklemme 42 rastend verankert, so daß das Tragelement 28 in seiner Transportposition gegen unbeabsichtigte Schwenkbewegungen gesichert ist.

In der Arbeitsposition gemäß Fig. 5 ist das Tragelement 28 schräg verlaufend ausgebildet, wobei es in seinem dem Rastteil 48 gegenüberliegenden Ende in die Aussparung 32 des Lagerungs- und Halteelements 30 eingetaucht ist. Auch in dieser Arbeitsposition ist das Tragelement 28 gegen unbeabsichtigte Schwenkbewegungen durch einen den Elementen 42 bis 48 gleichenden Mechanismus (Federstahlklemme mit Federstahlschnapper) arretiert. Zusätzlich ist in der Arbeitsposition gemäß Fig. 5 das Tragelement 28 im Bereich seines in die Aussparung 32 eingetauchten Endes von einer Stützfläche 50 abgestützt, die im Bodenbereich der Aussparung 32 des Lagerungs- und Halteelements 30 ausgebildet ist.

Mit Hilfe der hier beschriebenen Aufnahmevorrichtung ist es möglich, daß in einem Koffer 12 untergebrachte Notebook 14 zwischen einer Transportposition gemäß Fig. 4 und einer Arbeitsposition gemäß Fig. 5 zu verschwenken. Das erleichtert das Arbeiten mit dem Notebook 14 bei Unterbringung desselben in dem Koffer 12, da in der Arbeitsstellung gemäß Fig. 5 die Tastatur des Notebooks 14 eine ergonomisch vorteilhafte Ausrichtung einnimmt. Aus dieser Position kann das Notebook 14 beispielsweise herausgeschwenkt werden, wenn mit den am tastaturseitigen vorderen Ende des Notebooks 14 angedeuteten Einschüben für beispielsweise Hart- und Floppy-Discs gearbeitet werden sollen. Insoweit sind also sämtliche ggf. am Notebook 14 seitlich angeordnete Einschübe beim Arbeiten mit dem Notebook 14 zugänglich, in dem dieses auf einfache Weise aus der Arbeitsposition gemäß Fig. 5 in die Transportposition gemäß Fig. 4 verschwenkt wird.

## Patentansprüche

1. Aufnahmevorrichtung für ein tragbares Dateneingabegerät, insbesondere für einen tragbaren PC, wie ein Notebook, einen Laptop oder einen Palmtop, mit
- einem Tragelement (28) für das Dateneingabegerät (14), und
- einem Lagerungs- und Halteelement (30), an dem das Tragelement (28) zwischen mindestens zwei Schwenkpositionen schwenkbar gelagert und in jeder der Schwenkpositionen gegen unbeabsichtigte Schwenkbewegungen gesichert gehalten ist.

2. Aufnahmevorrichtung nach Anspruch 1, dadurch gekennzeichnet, daß das Lagerungs- und Halteelement (30) erste und zweite Stützflächen (36,50) aufweist, auf denen das Tragelement (28) in mindestens seiner ersten und seiner zweiten Schwenkposition aufliegt.

3. Aufnahmevorrichtung nach Anspruch 1 oder 2, dadurch gekennzeichnet, daß das Tragelement (28) in seiner ersten Schwenkposition im wesentlichen horizontal und in seiner zweiten Schwenkposition schräg zur Horizontalebene verlaufend ausgerichtet ist.

4. Aufnahmevorrichtung nach einem der Ansprüche 1 bis 3, dadurch gekennzeichnet, daß das Lagerungs- und Halteelement eine Aussparung (32) aufweist, oberhalb derer das Tragelement in seiner ersten Schwenkposition angeordnet ist und in die ein Teil das Tragelements (28) in dessen zweiter Schwenkposition hineingetaucht ist.

5. Aufnahmevorrichtung nach einem der Ansprüche 1 bis 4, dadurch gekennzeichnet, daß das Lagerungs- und Halteelement (30) eine Achse (34) aufweist, an der das Tragelement (28) drehbar gelagert ist.

6. Aufnahmevorrichtung nach einem der Ansprüche 1 bis 5, dadurch gekennzeichnet, daß das Lagerungs- und Halteelement (30) zwei in geradliniger Verlängerung zueinander angeordnete Achsen aufweist, an denen das Tragelement (28) drehbar gelagert ist.

7. Aufnahmevorrichtung nach Anspruch 4 und 5, dadurch gekennzeichnet, daß die Achse (34) sich über oder in der Aussparung (32) des Lagerungs- und Halteelements (30) erstreckt und an einem der die Aussparung (32) begrenzenden Rand (36) des Lagerungs- und Halteelements (30) angebracht ist.

8. Aufnahmevorrichtung nach Anspruch 4 und 6, dadurch gekennzeichnet, daß die beiden Achsen voneinander gegenüberliegenden Bereichen eines die Aussparung (32) des Lagerungs- und Halteelements (28) begrenzenden Randes (36) in die Aussparung (32) hineinragen.

9. Aufnahmevorrichtung nach einem der Ansprüche 1 bis 8, dadurch gekennzeichnet, daß das Tragelement (28) Lagerteile (38) aufweist, die als Stahlfeder-Klemmen (40) ausgebildet sind und auf die Achse (34) bzw. die Achsen insbesondere lösbar aufsteckbar sind.

10. Aufnahmevorrichtung nach einem der Ansprüche 1 bis 9, dadurch gekennzeichnet, daß das Lagerungs- und Halteelement (30) und das Tragelement (28) miteinander zusammenwirkende Rastvorrichtungen (42-48) zum Verrasten des Tragelements an dem Lagerungs- und Halteelement (30) in den mindestens zwei Schwenkpositionen aufweist.
